# EUROPEAN PATENT SPECIFICATION

(11) **EP 3 479 888 B1**
(45) Date of publication and mention of the grant of the patent: **12.08.2020**
(21) Application number: 18203812.5
(22) Date of filing: 31.10.2018
(51) Int. Cl.: B01D 19/00

(54) **GAS-LIQUID SEPARATOR**
GAS-FLÜSSIGKEIT ABSCHEIDER
SÉPARATEUR GAZ/LIQUIDE

(30) Priority: 02.11.2017 CN 201711062293
(43) Date of publication of application: 08.05.2019
(73) Proprietor: Carrier Corporation, Palm Beach Gardens, FL 33418 (US)
(72) Inventor: XU, Jiaoquan, Shanghai, 201206 (CN); FU, Qianli, Shanghai, 201206 (CN); HU, Jichao, Shanghai, 201206 (CN); GONG, Yao, Shanghai, 201206 (CN); LIU, Hongsheng, Shanghai, 201204 (CN)
(74) Representative: Schmitt-Nilson Schraud Waibel Wohlfrom Patentanwälte Partnerschaft mbB

(56) References cited:
- EP-A1- 3 229 933
- WO-A1-2011/095685
- CN-B- 103 604 258
- CN-B- 103 673 436
- US-A1- 2008 202 340
- US-A1- 2017 128 957

## Description

### Technical Field

The present invention relates to the field of refrigeration or cooling, and in particular, to a gas-liquid separator for a refrigeration system or a cooling system.

### Background Art

It is known that injectors are widely used in HVACs and refrigeration applications. A gas-liquid two-phase mixture, e.g., a gas-liquid two-phase refrigerant, is generally generated by an injector. The gas-liquid two-phase mixture is generally transmitted to a separator or a gas-liquid separator. The gas-liquid separator is constructed to separate the gas-liquid two-phase mixture into a gas phase and a liquid phase and then transmit the two phases to other downstream processing apparatuses, respectively.

However, an existing gas-liquid separator generally separates the two-phase mixture by using gravity. For example, the rising gas phase is collected at the top of the gas-liquid separator, and the falling liquid phase is collected at the bottom. Such a separation effect is undesirable, and the liquid transmitted downstream generally has got about 20% gas-phase substances mixed therein. Moreover, the gas transmitted downstream also has got a considerable quantity of liquid-phase substances mixed therein. The insufficient separation affects operations of other downstream processing apparatuses, and may even damage the downstream processing apparatuses.

CN 103 673 436 B shows a gas-liquid separator having a liquid dividing pipe, an outer cylinder, a cyclone separator and an annular filter net. The liquid pipe is connected to the cyclone through the outer cylinder.

CN 103 604 258 B shows a gas-liquid separator having a liquid separation pipe extending into a cylinder of the gas-liquid separator.

US 2017/128957 A1 shows cyclone device having a cyclone main body into which a first introduction pipe leads.

WO 2011/095685 A1 shows an arrangement for removing gas. The arrangement comprises a container and a feed line extending into the container.

US 2008/0202340 A1 show an apparatus for tangential introduction of a gas-loaded liquid stream into a top of a column in which gas and liquid are separated.

EP 3 229 933 A1 shows a separator for separating gas and solid material particles from a fluid flow, comprising a vessel and a fluid supply line.

Therefore, it is expected to provide an improved gas-liquid separator that can improve the separation efficiency of a gas-liquid two-phase mixture and meanwhile has got a relatively small pressure drop.

### Summary of the Invention

An objective of the present invention is to provide a gas-liquid separator which includes a mechanism for improving the separation efficiency of a gas-liquid two-phase mixture.

The objective of the present invention is implemented through the following technical solution as defined in claim 1.

A gas-liquid separator, including:
a body enclosing a cavity;
a gas outlet attached to the top of the body and communicated with the cavity;
a liquid outlet attached to the bottom of the body and communicated with the cavity;
an input tube constructed to include a bent portion and communicated into the cavity from the external of the body; and
a partition located in the cavity and including one or more holes.

The input tube further includes: a first part extending along a first straight line and downstream communicated with the bent portion; and a third part extending in the cavity along a third straight line and upstream communicated with the bent portion.

The bent portion extends along the curve, and the curve is selected from one or more of the following curves: an arc, an ellipse, a parabola, a part of a hyperbola, an irregular curve, or a combination of them.

The curve is a spiral line and extends along the periphery of the body for more than one round.

Further embodiments are defined in the dependent claims.

The gas-liquid separator of the present invention has got the advantages of a simple structure, convenient manufacturing, simple and convenient mounting and maintenance, and the like, and can separate a gas-liquid two-phase mixture efficiently, thus providing a purer gas flow and a purer liquid flow for downstream processing apparatuses and improving the overall efficiency of the system.

### Brief Description of the Drawings

The present invention will be described in further detail below with reference to accompanying drawings and preferred embodiments. However, those skilled in the art will understand that these accompanying drawings are merely drawn for explaining the preferred embodiments and should not be construed as limitations to the scope of the present invention. In addition, unless otherwise specified, the accompanying drawings are merely intended to schematically indicate composition or construction of a described object and may include exaggerative display. Moreover, the accompanying drawings are not necessarily drawn proportionally.
FIG. 1 is a side view of an embodiment of a gas-liquid separator according to the present invention.
FIG. 2 is another side view of the embodiment shown in FIG. 1.
FIG. 3 is a top view of the embodiment shown in FIG. 1.
FIG. 4 is a three-dimensional view of another embodiment of a gas-liquid separator according to the present invention.

### Detailed description

The preferred embodiments of the present invention will be described in detail below with reference to the accompanying drawings. Those skilled in the art will understand that these descriptions are merely descriptive and illustrative, and should not be construed as limiting the protection scope of the present invention.

First, it should be noted that orientation terms mentioned in the text such as top, bottom, upward, and downward are defined relative to directions in each accompanying drawing, and they are relative concepts and can thus be changed according to their different positions and different use states. Therefore, these or other orientation terms should not be construed as limitative terms.

Moreover, it should be further noted that for any single technical feature described or implied in the embodiments of the text or any single technical feature shown or implied in the accompanying drawings, these technical features (or equivalents thereof) can still be combined so as to obtain other embodiments of the present invention that are not directly mentioned in this text.

It should be noted that in different accompanying drawings, identical reference numerals represent identical or substantially identical components.

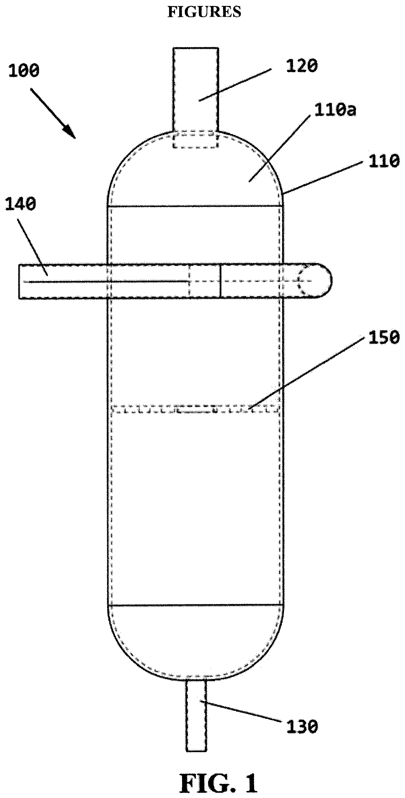

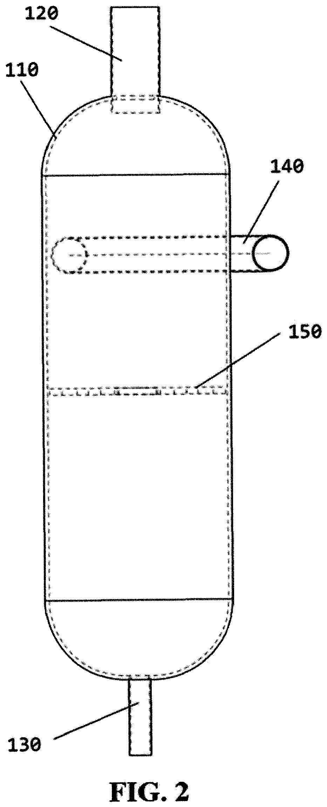

FIG. 1 is a side view of an embodiment of a gas-liquid separator according to the present invention, and FIG. 2 is another side view of the embodiment shown in FIG. 1. Dashed lines represent invisible parts of a component in the view, such as inner walls.

As shown in the drawing, a gas-liquid separator 100 includes: a body 110 enclosing a cavity 110a; a gas outlet 120 attached to the top of the body 110 and communicated with the cavity 110a; a liquid outlet 130 attached to the bottom of the body 110 and communicated with the cavity 110a; an input tube 140 constructed to include a bent portion 140b and communicated into the cavity 110a from the external of the body 110; and a partition 150 located in the cavity 110a and including one or more holes.

Optionally, the bent portion 140b can be located outside the body 110, or located inside the body 110, or extends through the body 110.

Optionally, the partition 150 can be constructed into a convex or concave shape, the one or more holes on the partition 150 can be located in the middle or on the edge of the partition 150, the one or more holes can be constructed to be distributed uniformly or non-uniformly, and the diameter of the one or more holes can be set according to actual needs.

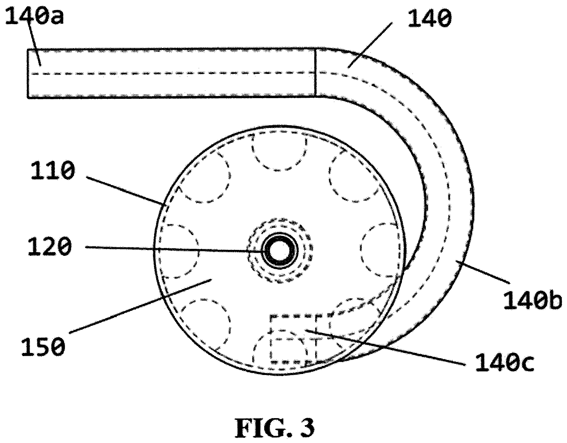

FIG. 3 is a top view of the embodiment shown in FIG. 1. The input tube 140 includes: a first part 140a extending along a first straight line and downstream communicated with the bent portion 140b; and a third part 140c extending in the cavity 110a along a third straight line and upstream communicated with the bent portion 140b.

The bent portion 140b is constructed to extend along a curve.

The curve is an arc line, which forms a central angle at a first angle. Those skilled in the art can also set the curve as other types of curves according to an actual need, such as an arc, an ellipse, a parabola, a part of a hyperbola, an irregular curve, or a combination of them.

In the embodiment shown in FIG. 3, the first angle is 180 degrees.

The inventive curve is a spiral line and extends along the periphery of the body 110 for more than one round.

Optionally, the third straight line is constructed to be tangent to an inner wall of the body 110.

Optionally, the input tube 140 penetrates into the body 110 from above the partition 150.

Optionally, at least one part of the bent portion 140b of the input tube 140 extends in the cavity 110a.

Optionally, at least one part of the bent portion 140b of the input tube 140 extends next to the inner wall of the body 110.

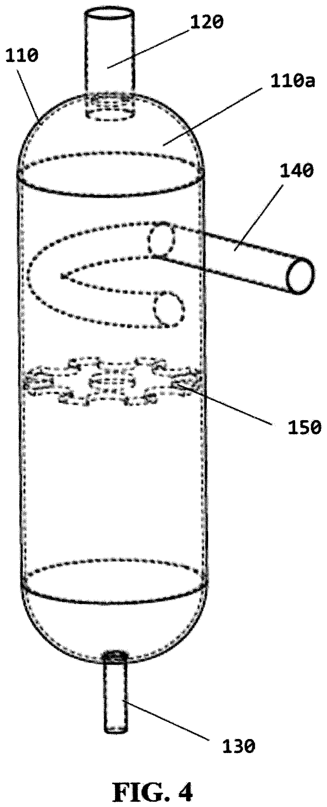

Optionally, a separator is disposed in the body 110, and the third part 140c of the input tube 140 is downstream connected to the separator. FIG. 4 is a three-dimensional view of another embodiment of a gas-liquid separator according to the present invention. The separator is a pipe spiraling on the inner wall of the cavity 110a or another similar component. A gas-liquid two-phase mixture entering the cavity 110a through the input tube 140 generates a centrifugal force under the effect of the pipe, and the liquid is separated from the gas under the effect of the gravity.

Optionally, the separator and the inner wall of the cavity 110a are integrated.

Optionally, the height of the pipe is reduced gradually.

Optionally, the partition 150 can be a circular structure with a plurality of holes, the liquid in the gas-liquid two-phase mixture passes through the circular structure under the effect of the gravity, and the partition 150 blocks the gas to some degree to prevent the gas from disturbing the liquid surface at the lower part of the cavity 110a.

Optionally, the first straight line, the second curve and the third straight line can be disposed on a radial plane of the body 110, or form a predetermined angle relative to a radial plane of the body 110, so as to improve the flowing direction of a fluid at an outlet of the input tube 140.

Optionally, the cross-section construction of the input tube 140 can be constructed to ascend or descend from upstream to downstream, so as to change the flow rate at the outlet of the input tube 140.

In use, the gas-liquid two-phase mixture is input from the first part 140a of the input tube 140 and moves along the bent portion 140b to obtain momentum in a circumferential direction. Then, after entering the cavity 110a through the third part 140c, the gas-liquid two-phase mixture will move along the inner wall of the body 110. Under the effects of the centrifugal force and the gravity, the higher-density liquid-phase substance tends to be deposited at the bottom of the body 110, and the lower-density gas-phase substance tends to rise to the top of the body 110. The liquid-phase substance dropped to the bottom of the body 110 will flow out through the liquid outlet 130, and the gas-phase substance accumulated at the top of the body 110 will flow out through the gas outlet 120.

According to an embodiment of the present invention, by using the gas-liquid separator 100 of the present invention, the gas phase and the liquid phase of the gas-liquid two-phase mixture can be separated efficiently with a separation rate of more than 90%.

Moreover, most of the input tube 140 is disposed outside the body 110, such that the size of the input tube 140 will not be limited by the size of the body 110. Moreover, a rising channel in the body 110 for the gas-phase component in the gas-liquid two-phase mixture will not be blocked, thus improving the operating efficiency of the gas-liquid separator 100.

Moreover, the input tube 140 of the present invention can further provide a relatively small pressure drop, such that the gas-liquid separation can be performed more quickly.

The present invention is disclosed in this specification with reference to the accompanying drawings, and those skilled in the art are enabled to implement the present invention, including manufacturing and using any apparatus or system, selecting suitable materials, and using any combined methods. The scope of the present invention is limited by the claimed technical solutions.

## Claims

1. A gas-liquid separator (100), comprising:
a body (110) enclosing a cavity (110a);
a gas outlet (120) attached to the top of the body (110) and communicated with the cavity (110a);
a liquid outlet (130) attached to the bottom of the body (110) and communicated with the cavity (110a);
an input tube (140) constructed to include a bent portion (140b) and communicated into the cavity (110a) from the external of the body (110); and
a partition (150) located in the cavity (110a) and comprising one or more holes;
wherein the input tube (140) further comprises: a first part (140a) extending along a first straight line and downstream communicated with the bent portion (140b); and a third part (140c) extending in the cavity (110a) along a third straight line and upstream communicated with the bent portion (140b);
wherein the bent portion (140b) extends along the curve, and the curve is selected from one or more of the following curves: an arc, an ellipse, a parabola, a part of a hyperbola, an irregular curve, or a combination of them; and
wherein the curve is a spiral line and extends along the periphery of the body (110) for more than one round.

2. The gas-liquid separator (100) according to Claim 1, **characterised in that** the bent portion (140b) is located inside the body (110), or extends through the body (110).

3. The gas-liquid separator (100) according to Claim 1 or 2, **characterised in that** the partition (150) is constructed into a convex or concave shape, the one or more holes on the partition (150) are located in the middle or on the edge of the partition (150), and the one or more holes are constructed to be distributed uniformly or non-uniformly and have got a predetermined size.

4. The gas-liquid separator (100) according to any of Claims 1 to 3, **characterised in that** the bent portion (140b) extends along a curve, and the curve is an arc line, which forms a central angle at a first angle.

5. The gas-liquid separator (100) according to any of Claims 1 to 4, **characterised in that** the third straight line is constructed to be tangent to an inner wall of the body (110).

6. The gas-liquid separator (100) according to any of Claims 1 to 5, **characterised in that** the input tube (140) penetrates into the body (110) from above the partition (150).

7. The gas-liquid separator (100) according to any of Claims 1 to 6, **characterised in that** a separator is disposed in the body (110), and the third part (140c) of the input tube (140) is downstream connected to the separator,
wherein the separator is a pipe spiraling on the inner wall of the cavity (110a).

8. The gas-liquid separator (100) according to Claim 7,
**characterised in that** the pipe and the inner wall of the cavity (110a) are integrated; and/or
**characterised in that** the length of the pipe is between a half circle and a complete circle, and the height of the pipe is reduced gradually.

9. The gas-liquid separator (100) according to any of Claims 4 to 8, **characterised in that** the first straight line, the curve and the third straight line are disposed on a radial plane of the body (110), or form a predetermined angle relative to a radial plane of the body (110).

10. The gas-liquid separator (100) according to any of Claims 1 to 9, **characterised in that** the cross-section construction of the input tube (140) ascends or descends from upstream to downstream.

## Patentansprüche

1. Gas-Flüssigkeits-Abscheider (100), aufweisend:
einen Körper (110), der einen Hohlraum (110a) umschließt;
einen Gasauslass (120), der an der Oberseite des Körpers (110) angebracht ist und mit dem Hohlraum (110a) in Verbindung steht;
einen Flüssigkeitsauslass (130), der an der Unterseite des Körpers (110) angebracht ist und mit dem Hohlraum (110a) in Verbindung steht;
ein Einlassrohr (140), das so konstruiert ist, dass es einen gebogenen Abschnitt (140b) beinhaltet und sich von der Außenseite des Körpers (110) in den Hohlraum (110a) erstreckt; und
ein Trennelement (150), das sich in dem Hohlraum (110a) befindet und ein oder mehrere Löcher umfasst;
wobei das Einlassrohr (140) ferner Folgendes umfasst: einen ersten Teil (140a), der sich entlang einer ersten geraden Linie erstreckt und stromabwärts mit dem gebogenen Abschnitt (140b) in Verbindung steht; und einen dritten Teil (140c), der sich entlang einer dritten geraden Linie in den Hohlraum (110a) erstreckt und stromaufwärts mit dem gebogenen Abschnitt (140b) in Verbindung steht;
wobei sich der gebogene Abschnitt (140b) entlang der Biegung erstreckt und die Biegung ausgewählt ist aus einer oder mehreren der folgenden Biegungen: einem Bogen, einer Ellipse, einer Parabel, einem Teil einer Hyperbel, einer unregelmäßigen Kurve oder einer Kombination aus diesen; und
wobei die Biegung eine Spirallinie ist und sich für mehr als eine Windung entlang der Peripherie des Körpers (110) erstreckt.

2. Gas-Flüssigkeits-Abscheider (100) nach Anspruch 1, **dadurch gekennzeichnet, dass** sich der gebogene Abschnitt (140b) innerhalb des Körpers (110) befindet oder sich durch den Körper (110) erstreckt.

3. Gas-Flüssigkeits-Abscheider (100) nach Anspruch 1 oder 2, **dadurch gekennzeichnet, dass** das Trennelement (150) mit einer konvexen oder konkaven Gestalt konstruiert ist, wobei sich das eine oder die mehreren Löcher in dem Trennelement (150) in der Mitte oder am Rand des Trennelements (150) befinden und das eine oder die mehreren Löcher so konstruiert sind, dass sie gleichmäßig oder nicht gleichmäßig verteilt sind und eine vorbestimmte Größe aufweisen.

4. Gas-Flüssigkeits-Abscheider (100) nach einem der Ansprüche 1 bis 3, **dadurch gekennzeichnet, dass** sich der gebogene Abschnitt (140b) entlang einer Biegung erstreckt und die Biegung eine Bogenlinie ist, die in einem ersten Winkel einen Zentralwinkel bildet.

5. Gas-Flüssigkeits-Abscheider (100) nach einem der Ansprüche 1 bis 4, **dadurch gekennzeichnet, dass** die dritte gerade Linie so konstruiert ist, dass sie tangential zu einer Innenwand des Körpers (110) ist.

6. Gas-Flüssigkeits-Abscheider (100) nach einem der Ansprüche 1 bis 5, **dadurch gekennzeichnet, dass** das Einlassrohr (140) von oberhalb des Trennelements (150) in den Körper (110) eintritt.

7. Gas-Flüssigkeits-Abscheider (100) nach einem der Ansprüche 1 bis 6, **dadurch gekennzeichnet, dass** ein Separator/Abscheider im Körper (110) angeordnet ist und der dritte Teil (140c) des Einlassrohrs (140) stromabwärts mit dem Separator/Abscheider verbunden ist,
wobei der Separator/Abscheider eine Rohrleitung ist, die spiralförmig an der Innenwand des Hohlraums (110a) verläuft.

8. Gas-Flüssigkeits-Abscheider (100) nach Anspruch 7,
**dadurch gekennzeichnet, dass** die Rohrleitung und die Innenwand des Hohlraums (110a) integriert sind; und/oder
**dadurch gekennzeichnet, dass** die Länge der Rohrleitung zwischen einem Halbkreis und einem Vollkreis liegt und sich die Höhe der Rohrleitung sukzessive verringert.

9. Gas-FlüssigkeitsAbscheider (100) nach einem der Ansprüche 4 bis 8, **dadurch gekennzeichnet, dass** die erste gerade Linie, die Biegung und die dritte gerade Linie auf einer radialen Ebene des Körpers (110) angeordnet sind oder einen vorbestimmten Winkel relativ zu einer radialen Ebene des Körpers (110) bilden.

10. Gas-Flüssigkeits-Abscheider (100) nach einem der Ansprüche 1 bis 9, **dadurch gekennzeichnet, dass** die Konstruktion des Einlassrohrs (140) im Querschnitt von stromaufwärts nach stromabwärts ansteigt oder abnimmt.

## Revendications

1. Séparateur gaz/liquide (100), comprenant :
un corps (110) renfermant une cavité (110a) ;
une sortie de gaz (120) attachée au sommet du corps (110) et mise en communication avec la cavité (110a) ;
une sortie de liquide (130) attachée au bas du corps (110) et mise en communication avec la cavité (110a) ;
un tube d'entrée (140) construit pour comporter une portion coudée (140b) et mis en communication dans la cavité (110a) depuis l'extérieur du corps (110) ; et
une cloison (150) située dans la cavité (110a) et comprenant un ou plusieurs trous ;
dans lequel le tube d'entrée (140) comprend en outre : une première partie (140a) s'étendant le long d'une première ligne droite et mise en communication en aval avec la portion coudée (140b) ; et une troisième partie (140c) s'étendant dans la cavité (110a) le long d'une troisième ligne droite et mise en communication en amont avec la portion coudée (140b) ;
dans lequel la portion coudée (140b) s'étend le long de la courbe, et la courbe est sélectionnée parmi une ou plusieurs des courbes suivantes : un arc, une ellipse, une parabole, une partie d'hyperbole, une courbe irrégulière, ou une combinaison de ceux-ci ; et
dans lequel la courbe est une ligne en spirale et s'étend le long de la périphérie du corps (110) sur plus d'un tour.

2. Séparateur gaz/liquide (100) selon la revendication 1, **caractérisé en ce que** la portion coudée (140b) est située à l'intérieur du corps (110), ou s'étend à travers le corps (110).

3. Séparateur gaz/liquide (100) selon la revendication 1 ou 2, **caractérisé en ce que** la cloison (150) est construite en une forme convexe ou concave, les un ou plusieurs trous sur la cloison (150) sont situés au milieu ou sur le bord de la cloison (150), et les un ou plusieurs trous sont construits pour être répartis uniformément ou non uniformément et avoir une taille prédéterminée.

4. Séparateur gaz-liquide (100) selon l'une quelconque des revendications 1 à 3, **caractérisé en ce que** la portion coudée (140b) s'étend le long d'une courbe, et la courbe est une ligne d'arc, qui forme un angle central à un premier angle.

5. Séparateur gaz/liquide (100) selon l'une quelconque des revendications 1 à 4, **caractérisé en ce que** la troisième ligne droite est construite pour être tangente à une paroi interne du corps (110).

6. Séparateur gaz/liquide (100) selon l'une quelconque des revendications 1 à 5, **caractérisé en ce que** le tube d'entrée (140) pénètre dans le corps (110) depuis le dessus de la cloison (150).

7. Séparateur gaz/liquide (100) selon l'une quelconque des revendications 1 à 6, **caractérisé en ce qu'**un séparateur est disposé dans le corps (110), et la troisième partie (140c) du tube d'entrée (140) est raccordée en aval au séparateur,
dans lequel le séparateur est un tuyau s'étendant en spirale sur la paroi interne de la cavité (110a).

8. Séparateur gaz/liquide (100) selon la revendication 7,
**caractérisé en ce que** le tuyau et la paroi interne de la cavité (110a) sont intégrés ; et/ou
**caractérisé en ce que** la longueur du tuyau est comprise entre un demi-cercle et un cercle complet, et la hauteur du tuyau est progressivement réduite.

9. Séparateur gaz/liquide (100) selon l'une quelconque des revendications 4 à 8, **caractérisé en ce que** la première ligne droite, la courbe et la troisième ligne droite sont disposées sur un plan radial du corps (110), ou forment un angle prédéterminé par rapport à un plan radial du corps (110).

10. Séparateur gaz/liquide (100) selon l'une quelconque des revendications 1 à 9, **caractérisé en ce que** la construction en section transversale du tube d'entrée (140) monte ou descend de l'amont à l'aval.
